# EUROPÄISCHE PATENTSCHRIFT

(11) **EP 1 342 018 B1**
(45) Veröffentlichungstag und Bekanntmachung des Hinweises auf die Patenterteilung: **11.05.2005**
(21) Anmeldenummer: 01982232.9
(22) Anmeldetag: 31.08.2001
(51) Int. Cl.: F16D 65/21

(54) **BETÄTIGUNGSEINHEIT FÜR EINE ELEKTROMECHANISCH BETÄTIGBARE SCHEIBENBREMSE**
OPERATING DEVICE FOR AN ELECTROMECHANICALLY ACTUATED DISK BRAKE
UNITE D'ACTIONNEMENT DESTINEE A UN FREIN A DISQUE POUVANT ETRE ACTIONNE ELECTROMECANIQUEMENT

(30) Priorität: 04.09.2000 DE 10043387; 11.06.2001 DE 10128251
(43) Veröffentlichungstag der Anmeldung: 10.09.2003
(73) Patentinhaber: Continental Teves AG & Co. OHG, 60488 Frankfurt am Main (DE)
(72) Erfinder: VÖLKEL, Jürgen, D-60486 Frankfurt am Main (DE); HALASY-WIMMER, Georg, D-71706 Markgröningen (DE)
(86) Internationale Anmeldenummer: PCT/EP2001/010084
(87) Internationale Veröffentlichungsnummer: WO 2002/021010

(56) Entgegenhaltungen:
- EP-A- 0 109 918
- WO-A-99/42739
- DE-A- 3 737 381
- DE-A- 19 519 310

## Beschreibung

Die Erfindung betrifft eine Betätigungseinheit für eine elektromechanisch betätigbare Scheibenbremse für Kraftfahrzeuge, die an einem Bremssattel angeordnet ist, in dem zwei mit je einer Seitenfläche einer Bremsscheibe zusammenwirkende Reibbeläge begrenzt verschiebbar angeordnet sind, wobei einer der Reibbeläge mittels eines verdrehgesicherten Betätigungselementes durch die Betätigungseinheit direkt und der andere Reibbelag durch die Wirkung einer vom Bremssattel aufgebrachten Reaktionskraft mit der Bremsscheibe in Eingriff bringbar ist, wobei die Betätigungseinheit mindestens aus einem Elektromotor sowie einem wirkungsmäßig zwischen dem Elektromotor und dem Betätigungselement angeordneten Untersetzungsgetriebe besteht und wobei Mittel zur Verdrehsicherung des Betätigungselementes in einem das Untersetzungsgetriebe aufnehmenden Getriebegehäuse angeordnet sind.

Eine elektromechanische Betätigungseinheit ist aus der internationalen Patentanmeldung WO 99/42739 bekannt. Bei der vorbekannten Betätigungseinheit ist das Betätigungselement durch die Gewindemutter eines Rollengewindetriebs gebildet, der als Untersetzungsgetriebe verwendet wird und dessen Gewindespindel vom Elektromotor angetrieben wird. Die Verdrehsicherung der Gewindemutter erfolgt mittels axialer Fortsätze, die in halbkreisförmige Öffnungen eines Lagerschildes eingeführt sind. Das Lagerschild bildet eine Lagerstelle sowohl für die Gewindemutter als auch für die Gewindespindel.

Als nachteilig wird bei der vorbekannten Betätigungseinheit angesehen, dass die erwähnte Verdrehsicherung des Betätigungselementes für einen modularen Aufbau der Betätigungseinheit ungeeignet ist bzw. dass das verwendete Untersetzungsgetriebe nicht prüfbar ist. Als weniger vorteilhaft ist auch der verhältnismäßig hohe Aufwand anzusehen, der insbesondere auf die kostenintensive Herstellung des Lagerschildes sowie der Gewindemutter zurückzuführen ist. Als ein weiterer Nachteil kann schließlich die Gefahr einer Verklemmung der axialen Fortsätze im Lagerschild, insbesondere in der Anfangsphase des Spannkraftaufbaus, genannt werden, die eine Verschlechterung des Wirkungsgrades zur Folge hat.

Weiterhin ist aus der DE 195 19 310 A1 eine elektromotorisch betriebene Bremsbetätigungseinheit bekannt, bei der die erwähnten Mittel zur Verdrehsicherung durch eine einer Gewindemutter zugeordnete Passfeder sowie einen in einem Getriebegehäuse ausgebildeten axialen Schlitz gebildet sind. Als nachteilig werden bei der bekannten Betätigungseinheit die für die Ausbildung des Schlitzes in einer Bohrung im Getriebegehäuse erforderliche aufwendige Bearbeitung, die Notwendigkeit der zuverlässigen Befestigung der Passfeder in der Gewindemutter, beispielsweise mittels einer Presspassung oder einer Schraubverbindung angesehen. Als weitere Nachteile können die asymmetrische Abstützung von innerhalb des Untersetzungsgetriebes auftretenden Momenten sowie die im Betrieb auftretende verhältnismäßig hohe Reibung angesehen werden.

Es ist daher Aufgabe der vorliegenden Erfindung, eine elektromechanische Betätigungseinheit der eingangs genannten Gattung vorzuschlagen, die einfacher und somit kostengünstiger herstellbar ist. Außerdem soll eine symmetrische Abstützung der während der Betätigung auftretenden Momente bei niedrigeren Reibungswerten erreicht werden.

Diese Aufgabe wird gemäß einer ersten Lösung dadurch gelöst, dass die Mittel durch Zylinderrollen sowie im Gehäuse bzw. im Betätigungselement ausgebildete Nuten gebildet sind.

Dabei ist es besonders vorteilhaft, wenn die Zylinderrollen in einem das Betätigungselement radial umgreifenden Gleitlager gehalten werden.

Eine zweite Lösung der vorhin gestellten Aufgabe besteht darin, dass die Mittel durch eine Profilierung der äußeren Fläche des Betätigungselementes sowie eine entsprechende innere Profilierung eines im Gehäuse verdrehsicher angeordneten, das Betätigungselement aufnehmenden Gleitlagers gebildet sind.

Dabei ist das Gleitlager vorzugsweise mit radialen Vorsprüngen versehen, die von im Gehäuse ausgebildeten Ausnehmungen bzw. Nuten aufgenommen werden.

Bei einer weiteren Ausgestaltung des Erfindungsgegenstandes ist vorgesehen, dass die Profilierung der äußeren Fläche des Betätigungselementes sowie die innere Profilierung des Gleitlagers als ein Polygonprofil ausgebildet sind.

Außerdem ist es besonders vorteilhaft, wenn das Untersetzungsgetriebe als ein Kugelgewindetrieb ausgebildet ist und dass das Betätigungselement durch die Gewindemutter des Kugelgewindetriebs gebildet ist.

Die Erfindung wird in der nachfolgenden Beschreibung von zwei Ausführungsbeispielen unter Bezugnahme auf die beiliegende Zeichnung näher erläutert. In der Zeichnung zeigt:
- Fig. 1: eine Ausführung der erfindungsgemäßen elektromechanischen Betätigungseinheit im Axialschnitt,
- Fig. 2: eine vereinfachte Darstellung einer bei der erfindungsgemäßen Betätigungseinheit nach Fig. 1 verwendeten Ausführung des Untersetzungsgetriebes, und
- Fig. 3: eine vereinfachte Darstellung einer anderen Aus führung des Untersetzungsgetriebes.

Die in der Zeichnung dargestellte, elektromechanische Betätigungseinheit nach der Erfindung dient der Betätigung einer Schwimmsattel-Scheibenbremse, deren lediglich schematisch angedeuteter Bremssattel in einem feststehenden Halter 29 verschiebbar gelagert ist. Ein Paar von Reibbelägen 4 und 5 ist im Bremssattel derart angeordnet, daß sie der linken und der rechten Seitenfläche einer Bremsscheibe 6 zugewandt sind.

Nachstehend wird der in der Zeichnung rechts gezeigte Reibbelag 4 als erster Reibbelag und der andere, mit 5 bezeichnete Reibbelag als zweiter Reibbelag bezeichnet. Während der erste Reibbelag 4 mittels eines Betätigungselements 7 durch die Betätigungseinheit direkt mit der Bremsscheibe 6 in Eingriff bringbar ist, wird der zweite Reibbelag 5 durch die Wirkung einer bei der Betätigung der Anordnung vom Bremssattel aufgebrachten Reaktionskraft gegen die gegenüberliegende Seitenfläche der Bremsscheibe 6 gedrückt.

Die erfindungsgemäße Betätigungseinheit, die mittels nicht gezeigter Befestigungsmittel am Bremssattel angebracht ist, weist einen modularen Aufbau auf und besteht im wesentlichen aus drei selbständigen Baugruppen bzw. Modulen, und zwar aus einer Antriebseinheit 1, einem den ersten Reibbelag 4 betätigenden ersten Untersetzungsgetriebe 2 und einem zwischen der Antriebseinheit 1 und dem ersten Untersetzungsgetriebe 2 wirkungsmäßig geschalteten zweiten Untersetzungsgetriebe 3.

Die vorhin erwähnte Antriebseinheit 1 besteht aus einem Elektromotor 11, der im dargestellten Beispiel als ein permanentmagneterregter, elektronisch kommutierter Motor ausgebildet ist, dessen Stator 9 unbeweglich in einem Motorgehäuse 12 angeordnet ist und dessen Rotor 10 durch einen ringförmigen Träger 13 gebildet ist, der mehrere Permanentmagnetsegmente 14 trägt. Zwischen dem Elektromotor 11 und dem vorhin erwähnten Betätigungselement 7 ist wirkungsmäßig das erste Untersetzungsgetriebe 2 angeordnet, das im gezeigten Beispiel als ein Kugelgewindetrieb 16 bis 18 ausgebildet ist, das in einem Teil 19 gelagert ist, das auch einteilig mit dem vorhin erwähnten Bremssattel ausgeführt sein kann. Der Kugelgewindetrieb besteht dabei aus einer Gewindemutter 16 sowie einer Gewindespindel 17, wobei zwischen der Gewindemutter 16 und der Gewindespindel 17 mehrere Kugeln 18 angeordnet sind, die bei einer Rotationsbewegung der Gewindespindel 17 umlaufen und die Gewindemutter 16 in eine axiale bzw. translatorische Bewegung versetzen. Die Gewindemutter 16 bildet dabei vorzugsweise das vorhin erwähnte Betätigungselement 7. Außerdem ist der Zeichnung zu entnehmen, daß die vom Elektromotor 11 über das zweite Untersetzungsgetriebe 3 angetriebene Gewindespindel 17 dreiteilig ausgebildet ist und aus einem mit der Gewindemutter 16 zusammenwirkenden rohrförmigen ersten Spindelteil 20, einem ringförmigen zweiten Spindelteil 21, sowie einem mit dem zweiten Untersetzungsgetriebe 3 zusammenwirkenden dritten Spindelteil 22 besteht. Das erste Spindelteil 20 begrenzt mit der Gewindemutter 16 wendelförmige Gewinderillen 23, in denen die Kugeln 18 umlaufen.

Die Anordnung ist dabei vorzugsweise derart getroffen, daß der Rotor 10 des Elektromotors 11 unter Zwischenschaltung des zweiten Untersetzungsgetriebes 3 die Gewindespindel 17 antreibt, während die Gewindemutter 16 sich am ersten Reibbelag 4 abstüzt. Der Lagerung des Rotors 10 dienen zwei Radiallager 8, 15, die im Motorgehäuse 12 bzw. in einem Lagerschild 25 angeordnet sind, das sich am Motorgehäuse 12 axial abstützt.

Eine Reduzierung des erforderlichen Motormoments wird bei der in der Zeichnung dargestellten Ausführung der Erfindung durch zweckmäßige Integration eines Planetengetriebes 30 - 34 erreicht, das das vorhin erwähnte zweite Untersetzungsgetriebe 3 bildet. Das Planetengetriebe, das wirkungsmäßig zwischen dem Rotor 10 und der Gewindespindel 17 angeordnet ist, besteht aus einem Sonnenrad 30, das vorzugsweise durch einen am Rotor 10 ausgebildeten, außen verzahnten Bereich gebildet ist, mehreren gestuften Planetenrädern, von denen zwei dargestellt und mit den Bezugszeichen 31 und 32 versehen sind, sowie einem Hohlrad 33. Das Hohlrad 33 wird durch einen innenverzahnten Bereich eines das Gehäuse des Planetengetriebes bildenden Deckels 26 gebildet.

Das dritte Spindelteil 22 ist vorzugsweise mittels einer Kupplungswelle 40 mit einem Planetenkäfig 36 des zweiten Untersetzungsgetriebes 3 verbunden. Dabei ist es besonders vorteilhaft, wenn beide Enden der Kupplungswelle 40 sowie die diese Enden aufnehmenden Bereiche des dritten Spindelteiles 22 und des Planetenkäfigs 36 derart ausgebildet sind, daß zwei Kardangelenke 41, 42 gebildet werden.

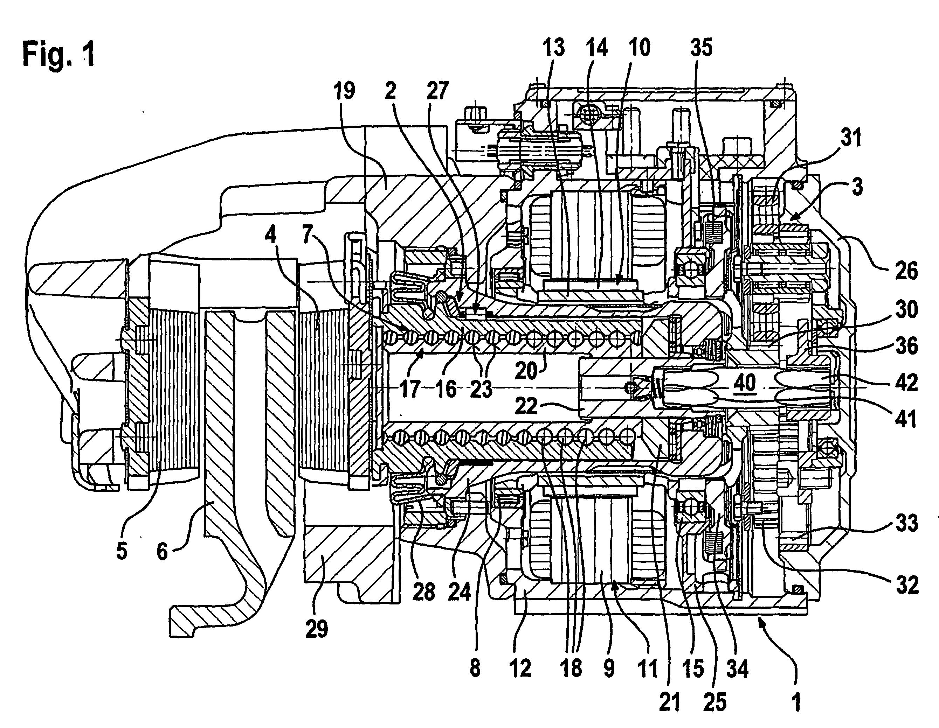

Wie weiterhin der Fig. 1 zu entnehmen ist, ist der Rotor 10 mit einem radialen Kragen 34 versehen, der Komponenten eines nicht näher dargestellten Lageerkennungssystems 35 trägt, mit dessen Hilfe die aktuelle Position des Rotors 10 ermittelt wird. Die Lageinformation wird dann mittels eines Hallsensors oder eines magnetoresistiven Elements ermittelt.

Der vorhin erwähnte Kugelgewindetrieb ist dabei vorzugsweise in einem topfförmigen Getriebegehäuse 24 derart untergebracht, daß seine Gewindemutter 16 durch geeignete Mittel gegen Verdrehen gesichert ist. Die Verdrehsicherungsmittel, die mit dem Bezugszeichen 27 versehen sind, befinden sich in dem dem ersten Reibbelag 4 zugewandten Bereich des Getriebegehäuses 24. Eine zwischen der Gewindemutter 16 und dem Getriebegehäuse 24 eingespannte elastische Dichtung bzw. Dichtmanschette 28 verhindert ein Eindringen von Verunreinigungen ins Innere des Kugelgewindetriebs.

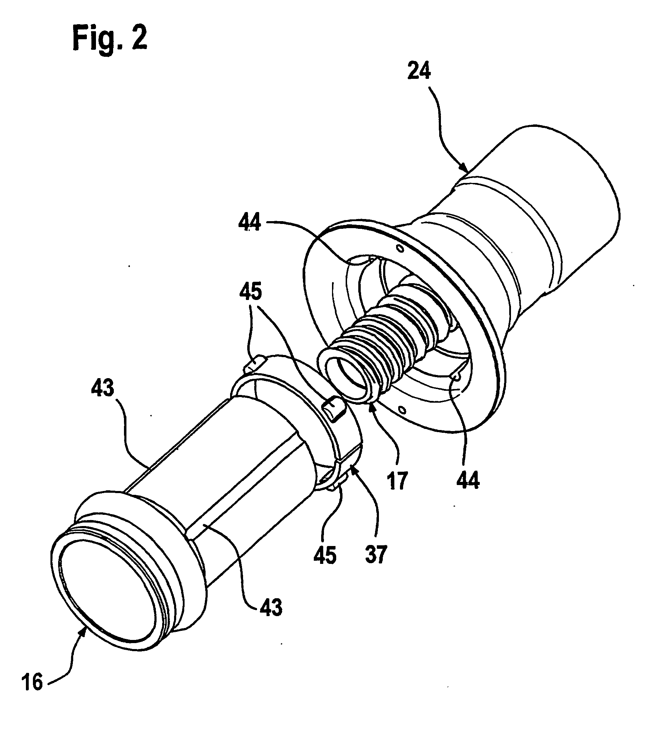

Die konstruktive Ausbildung der Verdrehsicherungsmittel 27 erhellt insbesondere aus Fig. 2. Der Explosionsdarstellung ist zu entnehmen, daß die Gewindemutter 16 auf ihrer zylindrischen Oberfläche mehrere Axialnuten 43 aufweist, während in der Innenwandung des Getriebegehäuses 24 entsprechend geformte Nuten 44 ausgebildet sind. Die Nuten 43, 44 nehmen in zusammengebautem Zustand des Kugelgewindetriebs 16 - 18 Zylinderrollen 45 auf, die die gewünschte Wirkung gewährleisten und die in einem ringförmigen Gleitlager 37 gehalten werden.

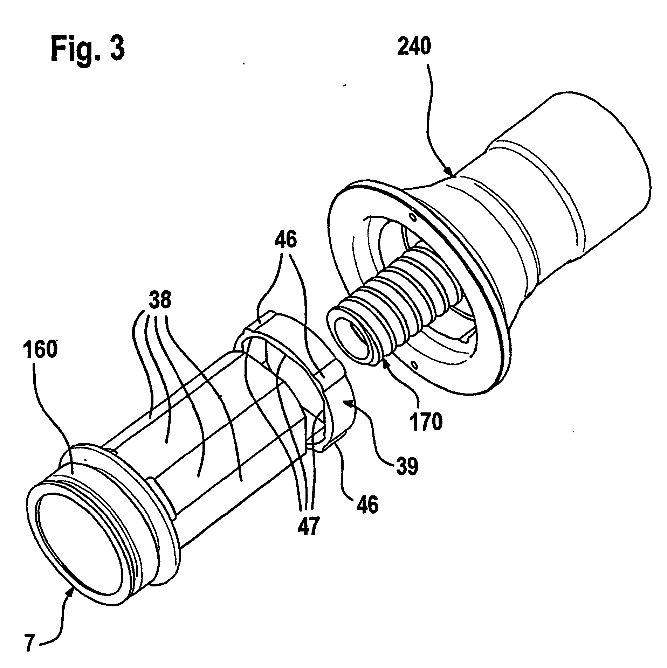

Bei der in Fig. 3 dargestellten zweiten Ausführung des Untersetzungsgetriebes werden die vorhin erwähnten Verdrehsicherungsmittel durch geeignete Gestaltung der betreffenden Komponenten gebildet. Zu diesem Zweck ist die Oberfläche des Betätigungselementes 7 bzw. der Gewindemutter 160 mit einer Profilierung 38 versehen, die im Querschnitt eine Polygonform aufweist. Ein mit radialen Vorsprüngen 46 versehenes, ringförmiges Gleitlager 39, das in zusammengebautem Zustand unverdrehbar im Getriebegehäuse 240 gehalten wird, weist eine der Profilierung 38 entsprechende Innenprofilierung 47 auf. Die Wirkung einer derartigen Verdrehsicherung ist ohne weiteres erkennbar, so daß sich eine Erläuterung erübrigt.

### Bezugszeichenliste

- 1: Antriebseinheit
- 2: Untersetzungsgetriebe
- 3: Untersetzungsgetriebe
- 4: Reibbelag
- 5: Reibbelag
- 6: Bremsscheibe
- 7: Betätigungselement
- 8: Radiallager
- 9: Stator
- 10: Rotor
- 11: Elektromotor
- 12: Motorgehäuse
- 13: Träger
- 14: Permanentmagnetsegment
- 15: Radiallager
- 16: Gewindemutter
- 17: Gewindespindel
- 18: Kugel
- 19: Teil
- 20: Spindelteil
- 21: Spindelteil
- 22: Spindelteil
- 23: Gewinderille
- 24: Getriebegehäuse
- 25: Lagerschild
- 26: Deckel
- 27: Verdrehsicherungsmittel
- 28: Dichtung
- 29 30: Sonnenrad
- 31: Planetenrad
- 32: Planetenrad
- 33: Hohlrad
- 34: Kragen
- 35: Lageerkennungssystem
- 36: Planetenkäfig
- 37: Gleitlager
- 38: Profilierung
- 39: Gleitlager
- 40: Kupplungswelle
- 41: Kardangelenk
- 42: Kardangelenk
- 43: Axialnut
- 44: Nut
- 45: Zylinderrolle
- 46: Vorsprung
- 47: Innenprofilierung
- 160: Gewindemutter
- 170: Gewindespindel
- 240: Getriebegehäuse

## Patentansprüche

1. Betätigungseinheit für eine elektromechanisch betätigbare Scheibenbremse für Kraftfahrzeuge, die an einem Bremssattel angeordnet ist, in dem zwei mit je einer Seitenfläche einer Bremsscheibe (6) zusammenwirkende Reibbeläge (4,5) begrenzt verschiebbar angeordnet sind, wobei einer (4) der Reibbeläge (4,5) mittels eines verdrehgesicherten Betätigungselementes (7) durch die Betätigungseinheit direkt und der andere Reibbelag (5) durch die Wirkung einer vom Bremssattel aufgebrachten Reaktionskraft mit der Bremsscheibe (6) in Eingriff bringbar ist, wobei die Betätigungseinheit mindestens aus einem Elektromotor (11), sowie einem wirkungsmäßig zwischen dem Elektromotor (11) und dem Betätigungselement (7) angeordneten Untersetzungsgetriebe (2) besteht und wobei Mittel (27) zur Verdrehsicherung des Betätigungselementes (7 bzw. 16) in einem das Untersetzungsgetriebe (2) aufnehmenden Getriebegehäuse (24) angeordnet sind, **dadurch gekennzeichnet, dass** die Mittel durch Zylinderrollen (45) sowie im Getriebegehäuse (24) bzw. im Betätigungselement (2 bzw. 16) ausgebildete Nuten (44 bzw. 43) gebildet sind.

2. Betätigungseinheit nach Anspruch 1 **dadurch gekennzeichnet, dass** die Zylinderrollen (45) in einem das Betätigungselement (7 bzw. 16) radial umgreifenden Gleitlager (37) gehalten werden.

3. Betätigungseinheit für eine elektromechanisch betätigbare Scheibenbremse für Kraftfahrzeuge, die an einem Bremssattel angeordnet ist, in dem zwei mit je einer Seitenfläche einer Bremsscheibe (6) zusammenwirkende Reibbeläge (4,5) begrenzt verschiebbar angeordnet sind, wobei einer (4) der Reibbeläge (4,5) mittels eines verdrehgesicherten Betätigungselementes (7) durch die Betätigungseinheit direkt und der andere Reibbelag (5) durch die Wirkung einer vom Bremssattel aufgebrachten Reaktionskraft mit der Bremsscheibe (6) in Eingriff bringbar ist, wobei die Betätigungseinheit mindestens aus einem Elektromotor (11), sowie einem wirkungsmäßig zwischen dem Elektromotor (11) und dem Betätigungselement (7) angeordneten Untersetzungsgetriebe (2) besteht und wobei Mittel (38,47) zur Verdrehsicherung des Betätigungselementes (7 bzw. 160) in einem das Untersetzungsgetriebe (2) aufnehmenden Getriebegehäuse (240) angeordnet sind, **dadurch gekennzeichnet, dass dadurch gekennzeichnet, dass** die Mittel durch eine Profilierung (38) der äußeren Fläche des Betätigungselementes (7 bzw. 160) sowie eine entsprechende innere Profilierung (47) eines im Getriebegehäuse (240) verdrehsicher angeordneten, das Betätigungselement (7 bzw. 160) aufnehmenden Gleitlagers (39) gebildet sind.

4. Betätigungseinheit nach Anspruch 3 **dadurch gekennzeichnet, dass** das Gleitlager (39) mit radialen Vorsprüngen (46) versehen ist, die von im Getriebegehäuse (240) ausgebildeten Ausnehmungen bzw. Nuten aufgenommen werden.

5. Betätigungseinheit nach Anspruch 3 oder 4 **dadurch gekennzeichnet, dass** die Profilierung (38) der äußeren Fläche des Betätigungselementes (7 bzw. 160) sowie die innere Profilierung (47) des Gleitlagers (39) als ein Polygonprofil ausgebildet sind.

6. Betätigungseinheit nach einem der Ansprüche 1 bis 5, **dadurch gekennzeichnet, dass** das Untersetzungsgetriebe als ein Kugelgewindetrieb (16-18) ausgebildet ist und dass das Betätigungselement (7) durch die Gewindemutter (16) des Kugelgewindetriebs (16-18) gebildet ist.

## Claims

1. Actuating unit for an electromechanically actuatable disc brake for automotive vehicles that is arranged on a brake caliper in which two friction linings (4, 5) that cooperate with each one lateral surface of a brake disc (6) are arranged so as to be displaceable within limits, wherein one (4) of the friction linings (4, 5), by means of an actuating element (7) secured against rotation, is directly movable into engagement with the brake disc by way of the actuating unit and the other friction lining (5) is movable into engagement with the brake disc (6) by the effect of a reaction force produced by the brake caliper, with said actuating unit at least comprising an electric motor (11) and a reducing gear (2) interposed between the electric motor (11) and the actuating element (7) in terms of effect, and wherein a means (27) for providing the anti-rotation mechanism of the actuating element (7 or 16, respectively) is arranged in a gearbox casing (24) accommodating the reducing gear (2),
**characterized in that** the means is formed of cylindrical rolls (45) and grooves (44 or 43, respectively) designed in the gearbox casing (24) or the actuating element (2 or 16, respectively), respectively.

2. Actuating unit as claimed in claim 1,
**characterized in that** the cylindrical rolls (45) are retained in a slide bearing (37) that embraces the actuating element (7 or 16, respectively) in a radial direction.

3. Actuating unit for an electromechanically actuatable disc brake for automotive vehicles that is arranged on a brake caliper in which two friction linings (4, 5) that cooperate with each one lateral surface of a brake disc (6) are arranged so as to be displaceable within limits, wherein one (4) of the friction linings (4, 5), by means of an actuating element (7) secured against rotation, is directly movable into engagement with the brake disc by way of the actuating unit and the other friction lining (5) is movable into engagement with the brake disc (6) by the effect of a reaction force produced by the brake caliper, with said actuating unit at least comprising an electric motor (11) and a reducing gear (2) interposed between the electric motor (11) and the actuating element (7) in terms of effect, and wherein means (38, 47) for providing the anti-rotation mechanism of the actuating element (7 or 160, respectively) are arranged in a gearbox casing (240) accommodating the reducing gear (2),
**characterized in that** the means is a profiling (38) of the outside surface of the actuating element (7 or 160, respectively) as well as a mating inside profiling (47) of a slide bearing (39) that is incorporated in the gearbox casing (240) secured against rotation and accommodates the actuating element (7 or 160, respectively).

4. Actuating unit as claimed in claim 3,
**characterized in that** the slide bearing (39) includes radial projections (46) being received in recesses or grooves, respectively, designed in the gearbox casing (240).

5. Actuating unit as claimed in claim 3 or 4,
**characterized in that** the profiling (38) of the outside surface of the actuating element (7 or 160, respectively) and the inside profiling (47) of the slide bearing (39) are configured as a polygonal profile.

6. Actuating unit as claimed in any one of claims 1 to 5,
**characterized in that** the reducing gear is designed as a screw actuator (16 to 18), and **in that** the actuating element (7) is formed of the threaded nut (16) of the screw actuator (16 to 18).

## Revendications

1. Unité d'actionnement d'un frein à disque à actionnement électromécanique pour véhicules automobiles, laquelle est disposée sur une selle de frein dans laquelle sont disposées deux garnitures de friction (4, 5) coopérant chacune avec une surface latérale d'un disque de frein (6) et pouvant coulisser dans une mesure limitée, l'une (4) des garnitures de friction (4, 5) pouvant être amenée en prise avec le disque de frein (6), au moyen d'un élément d'actionnement (7) bloqué en rotation, directement par l'unité d'actionnement, et l'autre garniture de frein (5) par l'action d'une force de réaction appliquée par la selle de frein, l'unité d'actionnement étant constituée au moins d'un moteur électrique (11) ainsi que d'un démultiplicateur (2) disposé de manière à agir entre le moteur électrique (11) et l'élément d'actionnement (7), et des moyens (27) étant disposés, pour le blocage en rotation de l'élément d'actionnement (7) ou (16), dans un carter de transmission (24) recevant le démultiplicateur (2), **caractérisée en ce que** les moyens sont formés par des rouleaux cylindriques (45) ainsi que par des rainures (44) ou (43) réalisées dans le carter de transmission (24) ou dans l'élément d'actionnement (2) ou (16).

2. Unité d'actionnement selon la revendication 1, **caractérisée en ce que** les rouleaux cylindriques (45) sont maintenus dans un palier de glissement (37) entourant radialement l'élément d'actionnement (7) ou (16).

3. Unité d'actionnement d'un disque de frein à actionnement électromécanique pour véhicules automobiles, laquelle est disposée sur une selle de frein dans laquelle sont disposées deux garnitures de friction (4, 5) coopérant chacune avec une surface latérale d'un disque de frein (6) et pouvant coulisser dans une mesure limitée, l'une (4) des garnitures de friction (4, 5) pouvant être amenée en prise avec le disque de frein (6), au moyen d'un élément d'actionnement (7) bloqué en rotation, directement par l'unité d'actionnement, et l'autre garniture de frein (5) par l'action d'une force de réaction appliquée par la selle de frein (6), l'unité d'actionnement étant constituée au moins d'un moteur électrique (11) ainsi que d'un démultiplicateur (2) disposé de manière à agir entre le moteur électrique (11) et l'élément d'actionnement (7), et des moyens (38, 47) étant disposés, pour le blocage en rotation de l'élément d'actionnement (7) ou (160), dans un carter de transmission (24) recevant le démultiplicateur (2), **caractérisée en ce que** les moyens sont formés par un profilage (38) de la surface extérieure de l'élément d'actionnement (7 ou 160) ainsi que par un profilage intérieur (47) correspondant d'un palier de glissement (39) disposé de manière à ne pouvoir tourner dans le carter de transmission (240) et recevant l'élément d'actionnement (7 ou 160).

4. Unité d'actionnement selon la revendication 3, **caractérisée en ce que** le palier de glissement (39) est pourvu de saillies radiales (46) qui sont reçues par des évidements ou rainures réalisés dans le carter de transmission (240).

5. Unité d'actionnement selon la revendication 3 ou 4, **caractérisée en ce que** le profilage (38) de la surface extérieure de l'élément d'actionnement (7 ou 160) ainsi que le profilage intérieur (47) du palier de glissement (39) sont réalisés comme profil polygonal.

6. Unité d'actionnement selon l'une des revendications 1 à 5, **caractérisée en ce que** le démultiplicateur est réalisé comme mécanisme à vis et billes (16-18) et **en ce que** l'élément d'actionnement (7) est formé par l'écrou taraudé (16) du mécanisme à vis et billes (16-18).
